(19) **Europäisches Patentamt**
**European Patent Office**
**Office européen des brevets**

(11) **EP 2 631 151 B1**

(12) **EUROPEAN PATENT SPECIFICATION**

(45) Date of publication and mention
of the grant of the patent:
**01.02.2017 Bulletin 2017/05**

(51) Int Cl.:
***G01M 17/10*** *(2006.01)*     ***B61K 13/00*** *(2006.01)*

(21) Application number: **13466003.4**

(22) Date of filing: **21.02.2013**

(54) **Testing plant for stationary tests of railway vehicles and methods for measurement on the testing plant**

Testanlage für stationäre Tests von Schienenfahrzeugen und Verfahren zur Messung auf der Testanlage

Installation d'essai pour tests fixes de véhicules ferroviaires et procédés de mesure sur l'installation d'essai

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2012 CZ 20120125**

(43) Date of publication of application:
**28.08.2013 Bulletin 2013/35**

(73) Proprietor: **VÚKV a.s.**
**158 00 Praha 5 (CZ)**

(72) Inventors:
 • **Satek, Jiri**
 **28002 Radovesnice I (CZ)**
 • **Culek, Bohumil**
 **53352 Staré Hradiste u Pardubic (CZ)**
 • **Chocholous, Martin**
 **28102 Cerhenice (CZ)**
 • **Safranko, Martin**
 **28002 Hradistko I (CZ)**
 • **Capek, Jan**
 **16000 Prague 6 (CZ)**
 • **Bartak, Stanislav**
 **28102 Cerhenice (CZ)**

(74) Representative: **Loskotová, Jarmila**
**K Závetinám 727**
**155 00 Praha 5 (CZ)**

(56) References cited:
**FR-A1- 2 810 950    GB-A- 2 377 258**

**Description**

Field of technology

This invention relates to the tests of driving properties and operation safety of railway vehicles particularly when standing a railway vehicle on warped rail, resistance of railway vehicle against rotation and simulation of riding of a curve of specific radius (see, for example, FR 2 810 950 A1, disclosing a testing plant for stationary tests of railway vehicles).

The prior art

Until now, the mechanical properties of railway vehicles can be determined with application of high effort using a simple universal test device and simple special jigs. These test methods, which use lifting devices associated with load gauges located under car bearing box, are usually not satisfactory with respect to application safety of the test and accuracy of the measurement results.

More complex devices may be used for individual areas of tests, for example test chassis for railway vehicle body tilting described in the invention CZ patent 287165. These measurement devices can only be used for single area of measurement and not for all types of the railway vehicles.

The tests that simulate position of the railway vehicle in a curve are either based on simulation of railway vehicle position in curve using a travelling platform or rotating the chassis to device - turning table installed in the track on which the railway vehicle had to be moved.

Normally, current test methods do not comply with all current requirements standardized by European standard ČSN EN 14363. In addition, it is not possible to employ these methods universally for rail, tram or underground tracks or railroads of non-standard wheel gauge.

Summary of the invention

The invention is defined by the technical features or method steps set forth in independent claims 1 and 5, respectively; additional features or method steps of the invention are disclosed in the dependent claims.

To a large extent, the above-mentioned drawbacks are removed by the testing plant for stationary checks of the railway vehicles, substance of which lies in composing the testing plant by several mobile modules of the following types:

- module of twisting plant type A, consisting of one bracket for wheel set, consisting of the main frame with four independent travelling wheels and two vertically movable wheel brackets connected via two hydraulic cylinders and setting mechanism and the spacer is fitted at least with two force sensors and at least with two movement sensors.

The module can be fitted with a removable adapter with two wheel brackets with wheel gauge adjustment.

- module of twisting plant type B, consisting of at least one bracket of wheel set, which consists from the main frame with four independent travelling wheels and two fixed brackets with setting mechanism; it is further equipped with two lifting members and removable binder with two wheel brackets with the possibility of wheel gauge adjustment, which can preferentially be equipped with at least two load sensors and at least two movement sensors.
- module of twisting plant type C, consisting of one bracket of wheel set, which consists of the main frame fitted with four independent travelling wheels. The main frame holds the binder in rotary assembly with two wheel bracers with the wheel gauge adjustment in which the load sensors are built-in. In addition, the main frame holds lifting members to tilt the binder and change position of the binder vertically.
- mobile module of the turning table consisting of the rotary table fixed on bogie and fitted with at least four adjustable wheel brackets and at least one turning hydraulic mechanism.

The testing plant can also be equipped with at least two longitudinal adapters fixed to the brackets of wheel sets and accessories to adjust the modules for measurement according to specification.

The module of twisting plant type A consists of the bogie frame on which movable wheel brackets are placed. The brackets are placed so that they allow continuous movement in vertical direction as well as in lateral direction that copies the lateral movement of wheels of tested railway vehicle from rail axis due to simulated tilting of the track. There are load gauge inserts under the supports to measure vertical forces acting on the wheel brackets. The module is fitted with a mechanism to adjust default height of the wheel brackets - levelling in the state of rest.

The A-type modules are connected to a control computer fitted with a measurement circuit and a control circuit connected to each other by back coupling and it is connected from the control circuit via electronic control unit and proportional distributor to the control hydraulic cylinder located on the module and fitted with potentiometer for lift measurement connected to the measurement circuit of the control computer and the electronic control unit via the back coupling and the module is furthermore fitted with electric forces sensor that is connected to the measurement circuit of the computer control circuit via a transmission bridge.

The B-type mobile module of the twisting plant consists of the travelling frame on which fixed brackets with adjustable height are installed and they do not allow continuous movement in vertical direction. These brackets may have a moveable binder installed with the wheel binders with wheel gauge adjustment potential. Using two telescopic members moving in vertical direction, the binder can be either lifted or tilted to stimulate change of lateral rail tilting profile. Here, the load gauges for measurement of vertical forces are integrated directly in the wheel brackets on the binder, which improves accuracy of measurements because the force values do not include passive resistance in anchorage of the binder. There are potentiometers installed between the module B bogie and the binder to measure changes to binder positions vertically. Simulation of change to lateral track tilt is performed by rotation of the binder around longitudinal axis using change to the lift of telescopic members and the binder also allows controlled movement in vertical direction. The module is fitted with the mechanism to adjust default height of the wheel brackets (levelling) in the state of rest.

The B-type modules are connected to the control panel with controls for manual control of telescopic members and to the measurement computer to display and record the measured values.

The C-type mobile module of twisting plant consists of the bogie frame with rotary anchoring of the binder on it with two wheel brackets with possibility of change to wheel gauge in which the force sensors are built. An inclinometer may be also installed on the binder to measure the lateral tilting of the binder. In addition, the main frame holds electromechanic lifting members to tilt the binder and change position of the binder vertically. The module is fitted with potentiometers between the bogie frame and the binder and the module is fitted with a mechanism to adjust default height of the wheel brackets - levelling in the state of rest. The mobile module of the turning table consists of the bogie frame with radial bearing installed axially on it, also with the turning table runner to which binders are attached using bolt connections to which the wheel brackets are installed, wherein the fork fixed to the bogie frame has hydraulic cylinder with the load gauge on one end and the other end has hydraulic cylinder with the load gauge installed in the fork attached on the turning table runner. Rotary movement of the turning table runner is carried out using the hydraulic cylinder with the load gauge for measurement of forces required for rotating of the turning table runner. The binder span can be adjusted to any dimension during assembly to the extent of the runner length depending on the wheel gauge of the test railway vehicle chassis. Wheel gauge of the wheel brackets can be adjusted using a screwed mechanism to any dimension depending on the wheel gauge of the test rail. Precise wire potentiometer, wire of which is embraced around the external bearing ring, is also attached on the turning table runner. When the runner rotates, the wire length increases or decreases depending on the turning table rotation angle.

The mobile module of the turning table is connected to the control panel for manual control of the module and to the measurement computer to display and record the measured values.

The procedure of measurement on the testing plant of the railway vehicles is that the test modules of the testing plant for stationary tests of the railway vehicles are transported to the test place. The railway vehicle placed on the track is lifted using shoplifting devices and then, relevant modules of the testing plant are inserted under the railway vehicle and operated. Using a levelling device, the railway vehicle is positioned at the contact points of the testing plant with the railway vehicle wheels to horizontal level and the railway vehicle positioned like this is put on the testing plant and the measurements of the test program are made. After the tests, the testing plant is disassembled into individual mobile modules and removed. Individual modules of the testing plant are inserted to the bogies for normal rail track of 1435 mm. Adjustability of individual modules allows testing of railway vehicles of different wheel gauge.

The A- and C-type modules are controlled using software application installed in the control computer and the B-type module of the mobile turning plate are controlled manually.

The movement of the A- and C-type modules is controlled using curves - pre-defined sequences that give direction of the movement and change to path or angle of rotation of the binder depending on time during which the track change and movement speed should occur. The control system allows synchronized controlling of these modules at the same time. The position, path of individual wheel brackets and the wheel forces measured on the load gauges are shown during the procedure on the control computer monitor. The curve operation starts e.g. by clicking on relevant button of the control panel shown on the control computer monitor. During the curve operation, the movement can be stopped and restarted using the controls on the control panel shown above. Measurement data are saved in the measurement computer for further processing.

The B-type module is connected to the control panel and the measurement computer and controlled manually using the controls on the control panel based on data on position, path and wheel forces shown on the measurement computer monitor. Measurement data are saved in the measurement computer for further processing.

The mobile module of the turning plate is connected to the control panel and measurement computer. This control panel houses different controls, for example throttle valves of hydraulic circuit to adjust speed of the rotating movement of the runner as well as manually or electrically controlled hydraulic distributor to start and stop the runner movement and to adjust direction of the runner movement.

The following values are shown on the monitor of the measurement computer - force measured on the load gauge of the hydraulic cylinder, torques of the turning plate and rotation angles. Measurement data are saved in the measurement computer for further processing.

The turning plate torque is evaluated from the forces measured on the load gauges of the hydraulic cylinder and the rotation angle (lengths of rolled off circumference of the turning plate bearing):

$$M = F \cdot L$$

Where:

$$L = b \cdot \sin \alpha$$

$$\alpha = \frac{\arccos(2 \cdot b^2 - 2 \cdot a \cdot b \cdot \cos(y0 + \Delta y))}{2 \cdot b \sqrt{a^2 + b^2 - 2 \cdot a \cdot b \cdot \cos(y0 + \Delta y)}}$$

$$y0 = \arccos\left(\frac{a^2 + b^2 + c0^2}{2 \cdot a \cdot b}\right)$$

$$\Delta y = \frac{360 \cdot \Delta l}{\pi \cdot D}$$

$$c0 = x + c$$

M    turning plate torque
F    force measured by load gauge on the hydraulic cylinder piston rod
L    turning plate torque arm
D    diameter of external bearing ring
a    distance between the cylinder eye centre on the chassis and the eye centre on the turning plate runner
b    distance between the cylinder eye centre and the turning plate bearing centre
c    moving out the hydraulic cylinder in the start position (turning angle 0°)
x    unchangeable dimension of the hydraulic cylinder
Δl    length of rolled off circumference of the turning plate bearing

The testing plant for the railway vehicles can also be used for checking of railway vehicle air suspension on the super elevation ramp, measurement of relative movements of air suspended masses, finding out of mutual movements of bodies of multiple body railway vehicles, measurement of stress on the structure of the twisted railway vehicle or record of the pressure progress in the air suspension. In addition, it is adapted to measurement of vertical wheel forces when standing a railway vehicle on warped rail, measurement of static wheel forces, measurement of tilting properties, measurement of chassis rotation resistance or simulation of standing the chassis under railway vehicle at curve of relevant radius (rotating the chassis under the railway vehicle at entered angle value).

The basic configuration of the testing plant allows testing of four-axle railway vehicles of normal wheel gauge and consists of four brackets of wheel sets. For testing of railway vehicles with more than four wheel sets, there are more wheel set brackets available and they can be used either as active or passive components. For testing of two-axle railway vehicles, reduced configuration with two wheel set brackets can be used.

The main benefit of the testing plant lies in its mobility, i.e. no transport of a railway vehicle to a test laboratory is necessary but the testing plant can be transported almost everywhere and assembled there. Another benefit is easy modification of the plant for different types of said measurements. Measurement data received by tests made on the mobile testing plant for railway vehicles is applicable for approval process for operation of the railway vehicles according

to ČSN EN 14363 standard. At the same time, they can be applied for optimization of safety, construction and operation of railway vehicles both for existing and newly designed solutions.

Figures overview

The invention is described in detail on drawings, where Fig. 1 shows schematic view on the testing plant, Fig. 2a shows mobile module of turning table, Fig. 2b shows geometrical possibilities of the turning table, Fig. 3 shows scheme of the A-type mobile module, Fig. 4 shows B-type module and Fig. 5 shows scheme of C-type module of the twisting plant and Fig. 6 shows scheme of the block scheme of connection of four modules of the testing plant.

Example of invention embodiment

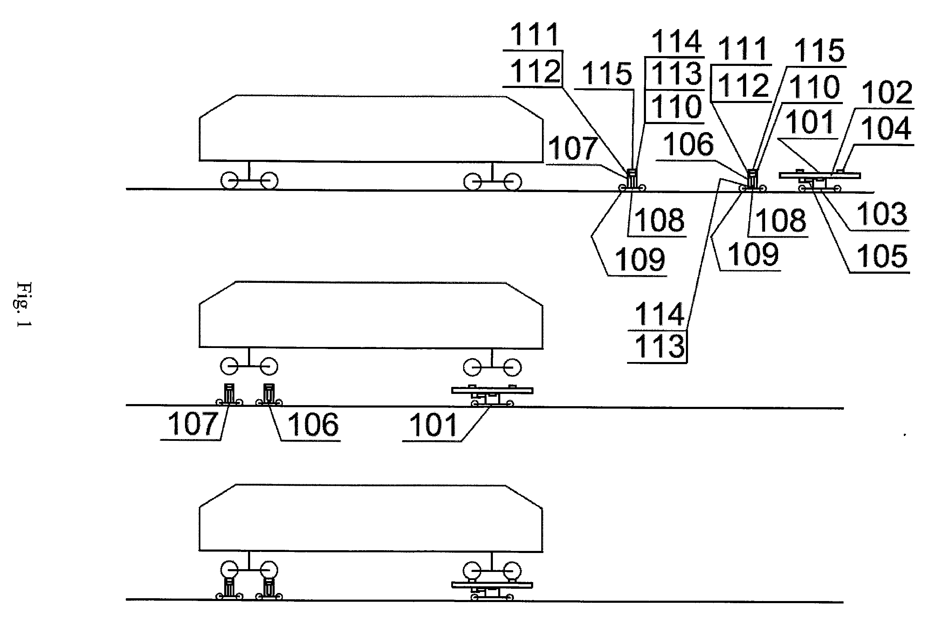

The attached drawing on Fig. 1 shows the testing plant for the stationary tests of railway vehicles, consisting of the mobile module of the turning table 101, consisting of the turning table 102 connected on the bogie frame 1 and preferentially fitted with at least two adjustable
wheel set brackets 104 and at least one rotating hydraulic mechanism 105 and of mobile modules of the twisting plant 106 of A-, B-, C-type (107), formed by the main frame 108 fitted with four independent travelling wheels 109 and two movable wheel brackets 110 connected using two lifting members 111 and setting mechanism 112, and it consists of at least two force sensors 113 and at least two movement sensors 114. The mobile module of the twisting plant 106 and 107 may be fitted with at least two adapters 115 longitudinal and/or lateral fitted to the wheel brackets 110.

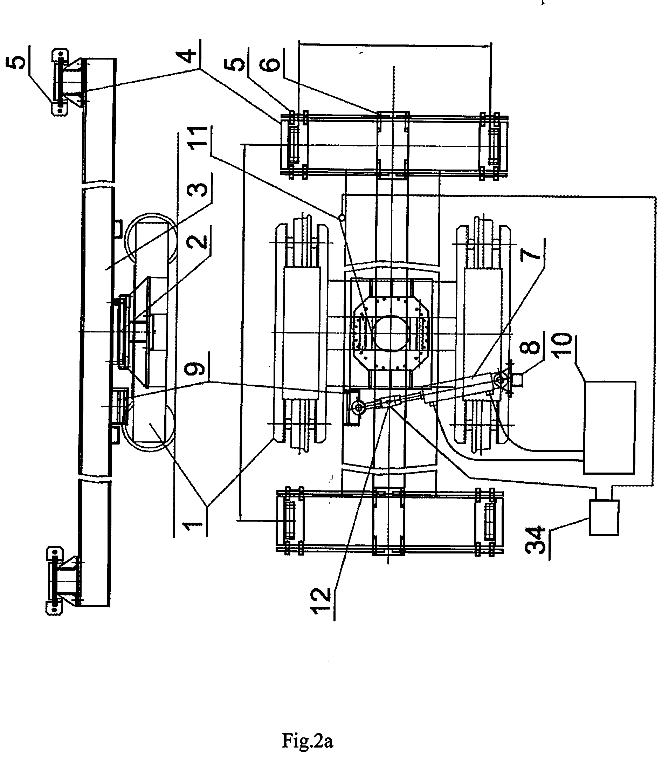

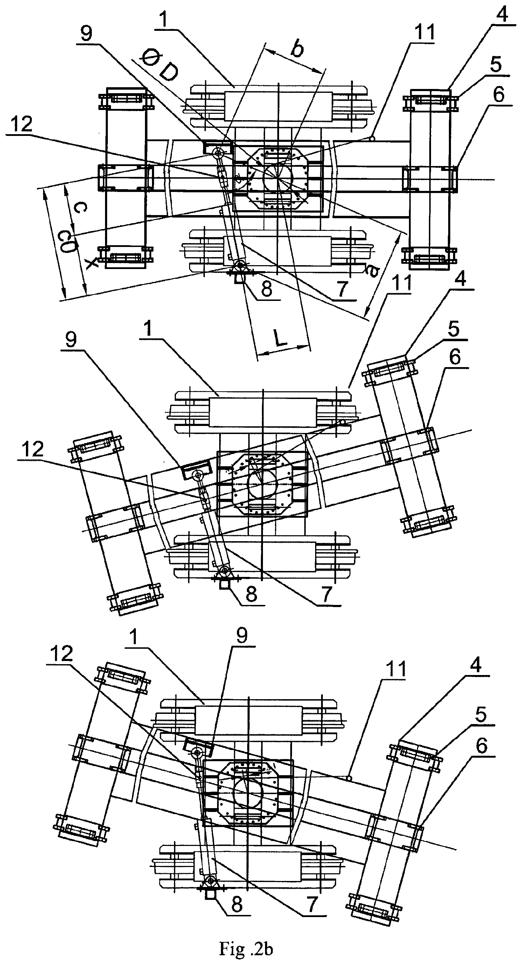

The mobile module of the turning table 101 shown on Fig. 2 consists of the bogie frame 1 with radial bearing 2 installed axially on it, also with a turning table runner 3 to which binders 4 are attached using bolt connections to which ends four wheel brackets 5 are installed, wherein the fork 8 fixed to the bogie frame 1 has hydraulic cylinder 7 with the load gauge on one end and the other end 7 has hydraulic cylinder with the load gauge installed in the fork 9 attached on the turning table runner 3. The binder span 4 can be adjusted to any dimension during assembly to the runner 3 length depending on the wheel gauge of the test railway vehicle chassis. Wheel gauge of the wheel brackets can be adjusted using a screwed mechanism 6 to any dimension depending on the wheel gauge of the test rail. The rotary movement of the turning plate runner is actuated using the hydraulic cylinder 7 with one end fixed to the fork 8 attached on the turning plate bogie frame 1 and the other end fixed to the fork 9 that is a firm part of the turning table runner 3. Direction and extent of the movement of the hydraulic cylinder 7 are controlled by manually controlled hydraulic distributor or electrically controlled hydraulic distributor located on the control panel 10 within the span of requested angles of rotation. The angle of rotation is continuously measured by the wire potentiometer 11 as length of rolled off circumference of the external diameter of external ring of axially radial bearing 2 firmly connected with the runner of the turning table 3. Furthermore, force required for rotating of the turning plate runner 3 is measured using the load gauge 12 located on the piston rod of the hydraulic cylinder 7. Using geometrical constants of the turning table, the force can be used to derive torque required for rotation of the runner of the turning table.

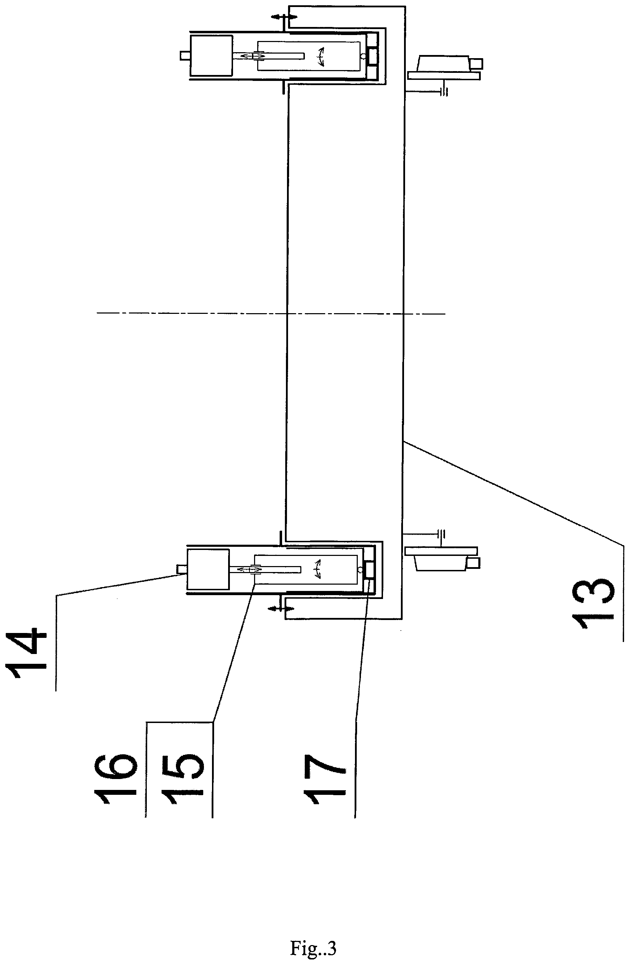

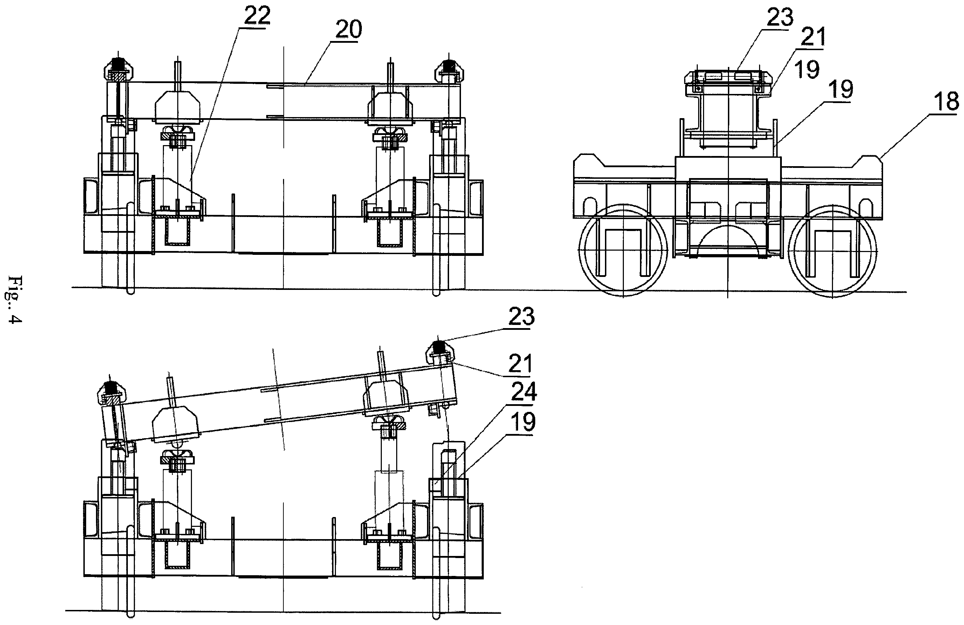

The mobile A-type module of the twisting plant shown on Fig. 3 consists of the bogie frame 13 on which movable wheel brackets 14 are fitted. They are placed so that they allow continuous movement in vertical direction as well as in lateral direction that copies the lateral movement of wheels of tested railway vehicle from rail axis due to simulated tilting of the track. Under the wheel brackets there are lifting members (hydraulic cylinders) 15 with integrated potentiometers 16 for measurement of lift of the lifting members 15 and load gauge 17 for measurement of vertical forces acting on the wheel brackets. The module is fitted with the mechanism to adjust default height of the wheel brackets 14 (levelling) in the state of rest. The mobile module B-type shown on Fig. 4 consists of the bogie frame 18 where fixed wheel brackets are installed with adjustable height 19, which do not allow continuous movement in vertical direction but allow adjustment of the default height (levelling) in the state of rest. In addition, the mobile module of the twisting plant is fitted with the movable binder 20 where the wheel brackets 21 with potential wheel gauge adjustments are installed. Using two telescopic members 22 moving in vertical direction, the binder 20 can be either lifted or tilted to stimulate change of lateral rail tilting profile. The load gauges 23 for measurement of vertical forces are integrated directly in the wheel brackets, which improve accuracy of measurements because the force values do not include passive resistance in anchorage of the binder. Position of the binder 20 against the bogie frame 18 is measured using wire potentiometers 24.

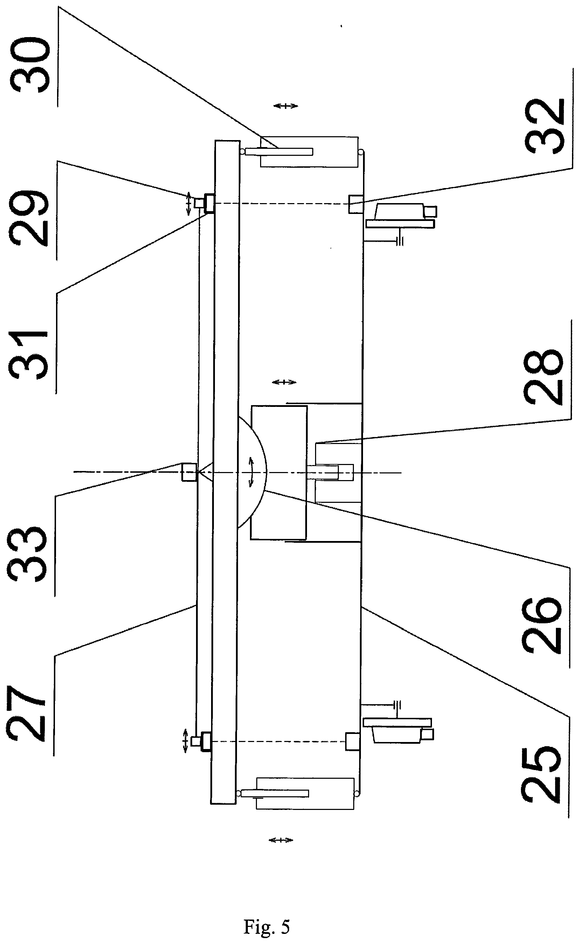

The mobile module C-type shown on Fig. 5 consists of the bogie frame 25 with seat 26 for anchoring of the binder 27. The seat 26 houses the binder 27 in rotary seating and the wheel brackets 29 are installed on it with option to change the wheel gauge. The seat is fitted with the mechanism 28 to adjust default height of the wheel brackets 27 with wheel supports 29 (levelling) in the state of rest. Using two electromechanic telescopic members 30 moving in vertical direction, the binder 27 can be either lifted or tilted to stimulate change of lateral rail tilting profile. The load gauges for measurement of vertical forces 31 are integrated directly in the wheel brackets, which improve accuracy of measurements because the force values do not include passive resistance in anchorage of the binder 27. Position of the binder 27 towards the bogie frame 25 is measured either using wire potentiometers 32 or inclinometer 33.

The procedure of measurement on the testing plant of the railway vehicles is that the test modules of the testing plant for stationary tests of the railway vehicles are transported to the test place. The railway vehicle placed on the track is lifted using shoplifting devices and then, relevant modules of the testing plant are inserted under the railway vehicle and operated. Using a levelling device, the railway vehicle is positioned at the contact points of the testing plant with the railway vehicle wheels to horizontal level and the railway vehicle positioned, like this is put on the testing plant and the measurements of the test program are made. After the tests, the testing plant is disassembled into individual mobile modules and removed. Individual modules of the testing plant are inserted to the bogies for normal rail track of 1435 mm. Adjustability of individual modules allows testing of railway vehicles of different wheel gauge.

Direction and extent of the cylinder movement 7 of the mobile turning plate module are controlled manually by controlled hydraulic distributor or electrically by controlled hydraulic distributor within the specified angles of rotation. The angle of rotation is continuously measured as length of rolled off circumference of the external diameter of external ring of bearing 2 firmly connected with the runner of the turning table 3. Furthermore, force required for rotating of the turning plate runner is measured using the load gauge 12 located on the piston rod of the hydraulic cylinder 7. Using geometrical constants of the turning table, the force can be used to derive torque required for rotation of the runner of the turning table:

$$M = F \cdot L$$

Where:

$$L = b \cdot \sin \alpha$$

$$\alpha = \frac{\arccos(2 \cdot b^2 - 2 \cdot a \cdot b \cdot \cos(y0 + \Delta y))}{2 \cdot b \sqrt{a^2 + b^2 - 2 \cdot a \cdot b \cdot \cos(y0 + \Delta y)}}$$

$$\Delta y = \frac{360 \cdot \Delta l}{\pi \cdot D}$$

$$c0 = x + c$$

Measured data of force and angle of rotation are continuously displayed on the monitor of the control computer 34 and saved in the measurement circuit for further processing.

The modules of A-type are controlled using software installed in the control computer 34. The movement of the A-type module is controlled using curves - pre-defined sequences that give direction of the movement and change to path or angle of rotation of the binder depending on time during which the track change and movement speed should occur. The control system allows controlling of multiple modules of the A-type at the same time (synchronized module control). The position (path) of individual wheel brackets 14 is shown during the procedure on the monitor of the control computer 34.

The curve operation starts by clicking on relevant button of the control panel shown on the monitor of the control computer 34. During the curve operation, the movement can be stopped and restarted using the controls on the control panel shown above. During the curve operation, the monitor displays also force values measured on the load gauges 17 of the controlled module. Measurement data are saved in the memory of the measurement circuit for further processing.

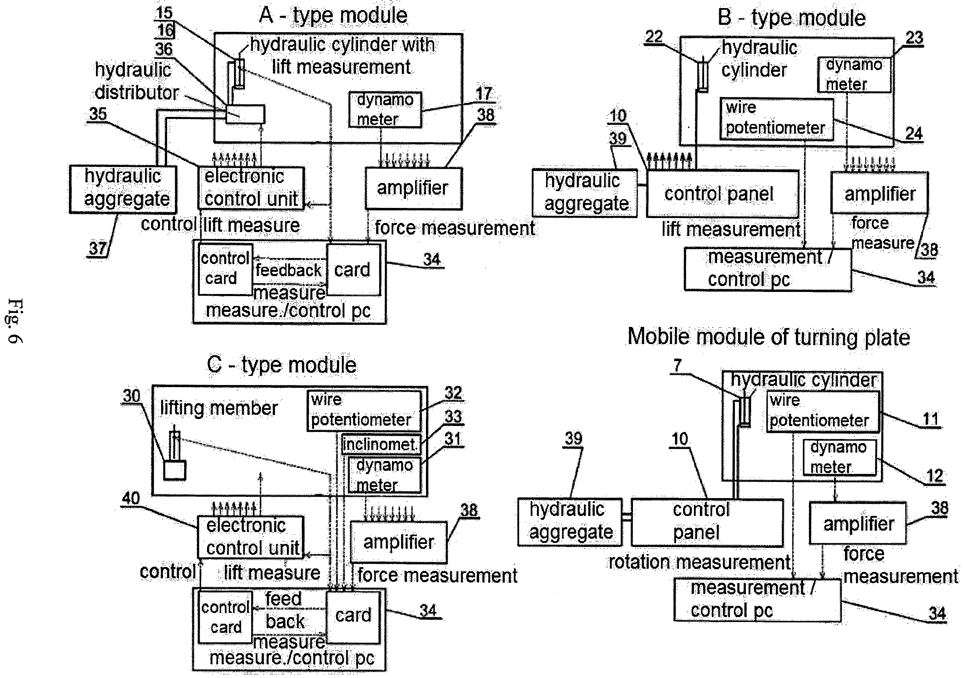

The attached drawing on Fig. 6 shows the control system of the testing plant for the A-type modules. The system consists of the control computer 34 fitted with a measurement circuit and a control circuit connected to each other by back coupling and it is connected from the control circuit via electronic control unit 35 and proportional distributor 36 to the control hydraulic aggregate 37 to the hydraulic cylinder 15 with integrated lift measurement 16 located on the A-type module (2) and which is connected to the control circuit of the control computer 34 and the electronic control unit 35 via the back coupling and the module is furthermore fitted with electric forces sensor 17 that is connected to the measurement circuit of the control computer 34 via measurement amplifier 38.

The B-type modules are controlled manually using the controls on the control panel 10 based on inputs about position, path and wheel forces displayed on the measurement computer 34 monitor. Measurement data are saved in the measurement computer 34 memory for further processing.

Fig. 6 also shows the control panel 10 connected to the hydraulic circuit of the B-type module and to the hydraulic circuit of the mobile turning plate, connected to the hydraulic aggregate 39. Both modules are fitted with electric force sensors 23 and 12, which are connected to the measurement computer 34 via the measurement amplifier 38 and wire potentiometers 11 and 24 for lift measurement (the B-module) or angle of rotation (for mobile turning plate module) are connected directly to the measurement computer 34.

The C-type modules are controlled using software application installed on the control computer. The movement is controlled using curves - pre-defined sequences that give direction of the movement and change to path (or angle of rotation of the binder) depending on time during which the track change and movement speed should occur. The control system allows controlling of multiple modules of the C-type at the same time (synchronized module control). Position (path) of individual wheel brackets (or angle of rotation of the binder) is displayed on the monitor of the control computer during their movement. The curve operation starts by clicking on relevant button of the control panel shown on the control computer monitor. During the curve operation, the movement can be stopped and restarted using the controls on the control panel shown above. During the curve operation, the monitor displays also force values measured on the load gauges of the controlled module. Measurement data are saved in the measurement computer memory for further processing.

Fig. 6 also shows the control system of the testing plant for the C-type modules. The system consists of the control computer 34 fitted with the measurement circuit and control circuit interconnected via back coupling and it is connected from the control circuit via the electronic control unit 40 to electric motor of the telescopic member 30 of the module to the lift 32 potentiometer metering or the inclinometer 33. In addition, the module is fitted with the electric force sensor 31 that is connected to the measurement circuit of the control computer 34 via the measurement amplifier 38.

Industrial applicability

The testing plant for stationary tests of the railway vehicles will be favourably used for the tests outside the test laboratory on the place of location of the railway vehicle with variable wheel gauge and number of elements.

**Claims**

1. A testing plant for stationary tests of railway vehicles, **characterized in that** the plant consists of a mobile module of turning plate (101) consisting of a turning table (102) fixed on a bogie (103) and fitted with at least two adjustable wheel brackets (104) and at least one rotating hydraulic mechanism (105) and of mobile modules of twisting plant (106 and 107), while each of them consists of a main frame (108) fitted with four independent travelling wheels (109) and two vertically adjustable wheel brackets (110) connected via two lifting members (111) and setting mechanism (112) and it is furthermore fitted at least two load sensors (113) and at least two movement sensors (114).

2. The testing plant for stationary tests of railway vehicles according to claim 1 **characterized in that** the mobile module of the twisting plant (106 and 107) is fitted with at least two adapters (115) either lateral and/or longitudinal fitted to the wheel brackets (110).

3. The testing plant for stationary tests of railway vehicles according to claim 2 **characterized in that** the mobile module of the turning table (101) consists of the bogie frame (1) with radial bearing (2) installed axially on it, also with a turning table runner (3) to which at least two binders (4) are attached to which at least two wheel brackets (5) are installed, wherein the fork (8) fixed to the bogie frame (1) has hydraulic cylinder (7) installed on one end and the other end has hydraulic cylinder (7) in the fork (9) attached on the turning table runner (3).

4. The testing plant for stationary tests of railway vehicles according to claim 1 and fitted with a control system comprising a control computer fitted with a measurement circuit and a control circuit connected to each other by back coupling, the control computer (34) being connected from the control circuit via electronic control unit and proportional distributor (36) to the control hydraulic cylinder (15) located on the module and fitted with potentiometer connected to the measurement circuit of the control computer and the electronic control unit via the back coupling and the module is furthermore fitted with electric forces sensor that is connected to the measurement circuit of the computer control circuit via a transmission bridge.

5. A method of measurement on the testing plant according to claims 1 to 4 **characterized in that** the test modules of the testing plant for stationary tests of the railway vehicles are transported to the test place, assembled and commissioned there, whereas the railway vehicle placed on the track is lifted and then, relevant modules of the testing plant are inserted under the railway vehicle and using a levelling device, the railway vehicle is positioned at the contact points of the testing plant with the railway vehicle wheels to horizontal level and the railway vehicle positioned like this is put on the testing plant and the measurements of the test program are made and after the tests, the testing plant is disassembled into individual mobile modules and removed.

6. The method of measurement on the testing plant according to claim 5 **characterized in that** the procedure of the tests is controlled using software application installed on the control computer, where the movement is controlled using curves, pre-defined sequences that give direction of the movement and change to path or angle of rotation of the binder depending on time during which the track change and movement speed should occur, whereas the control system allows controlling of multiple modules at the same time, which is synchronized module control, and the position, path of individual wheel brackets or angle of rotation of the binder is displayed on the monitor of the control computer during their movement, whereas the curve operation starts by clicking on relevant button of the control panel shown on the control computer monitor and during the curve operation, the movement can be continuously controlled using the controls on the control panel and during the curve operation, the monitor displays also force values measured on the load gauges of the controlled module, whereas measurement data are saved in the measurement computer memory for further processing.

7. The method of measurement on the testing plant according to claim 5 or 6 **characterized in that** the evaluation of the tests made on the testing plant for the mobile module of turning plate is performed using the relation for calculation of the turning plate torque:

$$M = F \cdot L \,,$$

where:

$$L = b \cdot \sin \alpha$$

$$\alpha = \frac{\arccos(2 \cdot b^2 - 2 \cdot a \cdot b \cdot \cos(y0 + \Delta y)}{2 \cdot b \sqrt{a^2 + b^2 - 2 \cdot a \cdot b \cdot \cos(y0 + \Delta y)}}$$

$$y0 = \arccos\left( \frac{a^2 + b^2 + c0^2}{2 \cdot a \cdot b} \right)$$

$$\Delta y = \frac{360 \cdot \Delta l}{\pi \cdot D}$$

$$c0 = x + c$$

**Patentansprüche**

1. Ein Prüfstand für stationäre Prüfungen von Schienenfahrzeugen, **dadurch gekennzeichnet, dass** er aus einem mobilen Drehanlagemodul (101), das eine auf einem Laufwerk (103) befestigte und mit zumindest zwei verstellbaren Radstützen (104) und zumindest einem hydraulischen Schwenkmechanismus ausgestattete Drehscheibe (102) aufweist, und aus mobilen Verwindeprüfstandsmodulen (106 und 107) besteht, wo jedes von diesem aus einem Hauptrahmen (108), der mit vier unabhängigen Laufwerkrädern (109) und zwei vertikal verschiebbaren durch zwei Hebeteilen (111) und einem Stellmechanismus (112) angeschlossenen Radstützen (110) und weiter mit zumindest zwei Kraftsensoren (113) und zumindest zwei Bewegungssensoren (114) ausgestattet ist.

2. Der Prüfstand für stationäre Prüfungen von Schienenfahrzeugen nach Anspruch 1, **dadurch gekennzeichnet, dass** das mobile Verwindeprüfstandsmodül (106 und 107) zumindest mit zwei Längs- und/oder Queradapter (115) ausgestattet ist, die zu Radstützen (110) befestigt sind.

3. Der Prüfstand für stationäre Prüfungen von Schienenfahrzeugen nach Anspruch 2, **dadurch gekenntzeichnet, dass** das mobile Drehbühnemodul (101) aus einem Laufwerkrahmen (1) besteht, auf welchem Axial-Radial-Lager (2) besetzt wird, auf welchem weiter Längsträger der Drehbühne (3) angelegt ist, zu welchem zumindest zwei Querträger (4) befestigt sind und auf welchen zumindest zwei Radstütze (5) eingestellt sind, wobei ein Ende eines Hydraulikzylinders (7) in der zum Laufwerkrahmen (1) befestigten Gabel (8) angelegt ist und das andere Ende des Hydraulikzylinders (7) in der zum Längsträger (3) befestigten Gabel (9) angelegt ist.

4. Der Prüfstand für stationäre Prüfungen von Schienenfahrzeugen nach Anspruch 1 ausgestattet mit einem Steuersystem beinhaltet ein Steuerrechner ausgestattet mit einer Messschaltung und ist mit der Steuerschaltung verbunden durch Rückkopplung, der Steuerrechner (34) ist von der Messschaltung durch elektronische Steuereinheit und proportionale Schaltanlage (36) zum Steuerhydraulikzylinder (15) verbunden, der auf dem Modul besetzt ist und welcher mit einem Potentiometer ausgestattet ist, der zur Messschaltung des Steuerrechners verbunden ist und Rückkopptung zur elektronischen Steuereinheit hat, wobei das Modul weiter mit einem elektrischen Kraftsensor, der durch eine Übertragungsbrücke zum Steuerrechner verbunden ist, ausgestattet ist.

5. Ein Messverfahren auf dem Prüfstand nach Ansprüche 1 - 4, **dadurch gekennzeichnet, dass** der Prüfstand für stationäre Prüfungen von Schienenfahrzeugen in Form der einzelnen mobilen Modulen auf das Prüfstelle transportiert wird, hier zusammengelegt und in Betrieb gesetzt wird, wobei das geprüfte auf den Schienen stehende Fahrzeug aufgehoben wird und folgend die zuständige Module des Prüfstandes unter das Fahrzeug eingeschoben werden und mit Hilfe eines Nivelliergeräts das Fahrzeug an Kontaktstellen des Prüfstandes und der Prüffahrzeugräder in horizontale Ebene gebracht wird und so das Prüffahrzeug auf den Prüfstand gestellt wird und Messungen dem Prüfprogramm nach durchgeführt werden und nach dem Prüfsende der Prüfstand wieder auf mobile Modulen demontiert wird, in die Laufwerke transportiert und weggenommen wird.

6. Das Messverfahren auf dem Prüfstand nach Anspruch 5, **dadurch gekennzeichnet, dass** Verlauf der Prüfungen vom Software des Steuerrechners gesteuert wird, wobei die Bewegungssteuerung auf Grund von Linien durchgeführt wird, also vordefinierter Sequenz gebende die Bewegung und Änderung der Trajektorie oder des Winkels der Querträgerdrehung in Abhängigkeit von der Zeit, in der die zuständigen Änderung der Trajektorie und Bewegungsgeschwindigkeit realisiert werden sollen, wobei das Steuersystem Steuerung mehrerer Modulen auf einmal ermöglicht, es geht um synchronisierte Modulsteuerung, wobei die Position, die Trajektorie der einzelnen Radstützen oder der Winkel der Querträgerdrehung im Laufe ihrer Bewegung auf dem Bildschirm des Steuerrechner erscheinen, wobei Realisation der Linie zum Beispiel mit Anklicken auf zuständige Drucktaste des auf dem Bildschirm des Steuerrechners abgebildeten Steuerpanels angefangen wird, wobei es im Laufe der Realisation der Linie möglich ist die Bewegung durchlaufend durch Steuertasten des höher erwähnten Steuerpanels zu steuern, wobei auf dem Bildschirm im Laufe der Realisation der Linie auch Größe von auf den Kraftsensoren des gesteuerten Moduls gemessenen Kräften abgebildet werden und die gemessene Daten auf die Platte des Steuerrechners für spätere Verarbeitung gespeichert werden.

7. Das Messverfahren auf dem Prüfstand nach Ansprüche 5 oder 6, **dadurch gekennzeichnet, dass** Bewertung der Prüfungen auf dem Prüfstand für mobiles Drehanlagemodul mit Hilfe der Berechnung des Drehmoments der Drehanlage durchgeführt wird:

$$M = F \cdot L,$$

wo:

$$L = b \cdot \sin \alpha$$

$$\alpha = \frac{\arccos(2 \cdot b^2 - 2 \cdot a \cdot b \cdot \cos(y0 + \Delta y)}{2 \cdot b \sqrt{a^2 + b^2 - 2 \cdot a \cdot b \cdot \cos(y0 + \Delta y)}}$$

$$y0 = \arccos\left(\frac{a^2 + b^2 + c0^2}{2 \cdot a \cdot b}\right)$$

$$\Delta y = \frac{360 \cdot \Delta l}{\pi \cdot D}$$

$$c0 = x + c$$

**Revendications**

1. Installation d'essai pour tests fixes de véhicules ferroviaires, **caractérisé en ce qu'** il est constitué d'un module mobile de la plaque tournante (101), qui est composé d'une table tournante (102) installée sur une organe de roulement (103) dotée d'au moins deux supports réglables de roues (104) et d'au moins un mécanisme hydraulique rotatif (105), et des modules mobiles du banc d'essai de torsion (106 et 107), chacun d'eux étant constitué d'un cadre principal du châssis de bogie (108) comportant quatre roues de roulement indépendantes (109) et deux supports de roues coulissants verticalement (110) qui sont attachés par deux éléments de levage (111) et par un mécanisme de réglage (112) qui est également équipé d'au moins deux capteurs de force (113) et d'au moins deux capteurs de mouvement (114).

2. Installation d'essai pour tests fixes de véhicules ferroviaires, selon la revendication 1., caractérisé en c e que le module mobile du banc d'essai (106 et 107) est pourvu d'au moins deux adaptateurs (115) longitudinaux et/ou transversaux qui sont fixés sur les supports de roues (110).

3. Installation d'essai pour tests fixes de véhicules ferroviaires, selon la revendication 2., caractérisé en c e que le module mobile de la plaque tournante (101) est composé d'un châssis (1) sur lequel un galet combiné axial/radial est monté (2) où, ensuite, un longeron de plaque tournante est monté (3), sur lequel au moins deux traverses sont attachées (4) et celles-ci portent au moins deux supports de roues (5) ; or, la fourche (8) installée sur le châssis de bogie (1) porte une extrémité du cylindre hydraulique (7) et l'autre extrémité du cylindre hydraulique (7) est logée dans la fourche (9) attachée à la traverse de la plaque tournante (3).

4. Installation d'essai pour tests fixes de véhicules ferroviaires, selon la revendication 1., équipé d'un ordinateur de commande avec un circuit de mesure, connecté au circuit de commande par la rétroaction, l'ordinateur de commande (34) avec son circuit de commande est connecté par une unité de commande électronique et un distributeur proportionnel (36) au cylindre hydraulique de commande (15), situé sur le module et doté d'un potentiomètre connecté au circuit de commande de l'ordinateur et ensuite, par la rétroaction, à l'unité de commande électronique ; le module comporte également un capteur électrique de force qui est connecté par un pont de données au circuit de mesure de l'ordinateur de commande.

5. Méthode de mesure sur l'installation d'essai, selon les revendications 1. - 4., **caractérisée en ce que** l'installation d'essai pour les essais statiques des véhicules ferroviaires est transporté, module par module, à l'endroit où les essais auront lieu où il sera assemblé et mis en service ; le véhicule faisant l'objet d'essais est placé sur les rails et est levé pour que les modules respectifs du banc d'essai puissent être mis au-dessous de celui-ci, un niveau est utilisé pour ajuster le véhicule par rapport aux lieux de contact du banc d'essai de sorte que les roues soient en position horizontale et le véhicule testé est ensuite mis sur le banc d'essai pour effectuer des mesures de programme d'essai et après la fin de mesure, le banc d'essai est désassemblé en modules mobiles, mis dans des chariots et transporté.

**6.** Méthode de mesure sur l'installation d'essai, selon la revendication 5., **caractérisée en ce que** le déroulé des essais est géré par les logiciels de l'ordinateur de commande ; la commande des mouvements se fait sur la base des courbes, c'est-à-dire des séquences prédéfinies indiquant la direction du mouvement et le changement de trajectoire ou de l'angle de rotation de la traverse en fonction du temps pendant lequel le changement de trajectoire et de vitesse de mouvement devrait être réalisé ; le système de commande permet de contrôler plusieurs modules à la fois, il s'agit donc d'une commande de modules synchronisée et la position, la trajectoire de chaque support de roue et l'angle de rotation de la traverse s'affichent sur l'écran de l'ordinateur de commande pendant que les modules sont en mouvements ; les boutons du panneau de commande permettent de contrôler continuellement le mouvement lors de la réalisation des courbes : à part des courbes, les intensités des forces mesurées par les capteur de force du module commandé s'affichent sur l'écran et les données enregistrées sont sauvegardées sur le disque de l'ordinateur de commande pour un traitement ultérieur.

**7.** Méthode de mesure sur l'installation d'essai, selon les revendications 5 ou 6., **caractérisé en ce que** l'évaluation des essais sur le banc d'essai pour le module mobile de la plaque tournante est effectué par le rapport pour le calcul du moment de la force de la plaque tournante :

$$M = F \cdot L,$$

où :

$$L = b \cdot \sin \alpha$$

$$\alpha = \frac{\arccos(2 \cdot b^2 - 2 \cdot a \cdot b \cdot \cos(y0 + \Delta y)}{2 \cdot b \sqrt{a^2 + b^2 - 2 \cdot a \cdot b \cdot \cos(y0 + \Delta y)}}$$

$$y0 = \arccos\left(\frac{a^2 + b^2 + c0^2}{2 \cdot a \cdot b}\right)$$

$$\Delta y = \frac{360 \cdot \Delta l}{\pi \cdot D}$$

$$c0 = x + c$$

Fig. 1

Fig.2a

Fig .2b

Fig..3

Fig.. 4

Fig. 5

Fig. 6

**A - type module**

15
16
36

hydraulic cylinder with lift measurement

hydraulic distributor

dynamo meter — 17

35

hydraulic aggregate

electronic control unit

38

amplifier

37

control | lift measure

force measurement

control card ← feedback → card — 34

measure

measure./control pc

**B - type module**

22

hydraulic cylinder

dynamo meter — 23

wire potentiometer

24

10
39

hydraulic aggregate

control panel

amplifier

lift measurement

force measure 38

measurement / control pc — 34

**C - type module**

30

lifting member

wire potentiometer — 32

inclinomet. — 33

dynamo meter — 31

40

electronic control unit

amplifier — 38

control | lift measure

force measurement

control card ← feed back → card — 34

measure

measure./control pc

**Mobile module of turning plate**

7

hydraulic cylinder

wire potentiometer — 11

dynamo meter — 12

39

10

hydraulic aggregate

control panel

amplifier — 38

rotation measurement

force measurement

measurement / control pc — 34

EP 2 631 151 B1

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2810950 A1

- CZ 287165